# EUROPEAN PATENT APPLICATION

(11) **EP 2 634 086 A1**
(43) Date of publication of application: **04.09.2013**
(21) Application number: 12382073.0
(22) Date of filing: 28.02.2012
(51) Int. Cl.: B64C 1/06, B64C 1/14

(54) **Reinforcing structure integrated in the internal structure of an aircraft of composite material**

(71) Applicant: Airbus Operations S.L., 28906 Madrid (ES)
(72) Inventor: Cruz Dominguez, Francisco José, 28027 Madrid (ES); Arévalo Rodriguez, Elena, 28035 Madrid (ES)
(74) Representative: Elzaburu Marquez, Alberto

(57) **Abstract**

Reinforcing structure (10) integrated in the internal structure of an aircraft made of composite material, said structure (10) comprising a skin (3) and a plurality of stringers (4), and at least a pair of lateral reinforcing elements (20, 30) having a beam shape in the longitudinal orientation, these reinforcing elements (20, 30) being integrated with the skin (3) of the structure, the stringers(4) being also integrated in said skin (3), and the lateral reinforcing elements (20, 30) being designed in such a way that they longitudinally morph into the shape of the stringers (4). The invention also refers to a tool (100) for making such a reinforcing structure (10).

## Description

### FIELD OF THE INVENTION

The present invention refers to an internal structure of an aircraft made of composite material, in particular for fuselages of aeronautical structures or similar aircraft structures, and, more precisely, an integrated reinforced structure in an internal structure of an aircraft made of composite materials.

### Background of the Invention

Aeronautical structures are designed with the aim of seeking the optimization of the structures with a minimal weight while being in compliance with the requirements of resistance and stiffness. For these reasons, among others, the use of composite materials in primary aircraft structures is constantly expanding, especially in structures which belong to the fuselage of the aircraft, due to the fact that by properly applying said composite materials, a significant weight saving is obtained vis-à-vis a conventional design made of metallic material.

The typical primary structure that shapes the fuselage of an aircraft comprises a skin and a plurality of stringers and frames. Longitudinal stiffness of the skin is obtained with stringers with the aim of optimizing its weight. The frames placed transversally to the stringers prevent general fuselage instability, while at the same time helping to optimize the weight of the skin and serving to transmit local load inputs to the overall structure.

By taking advantage of the manufacturing features of composite materials, it is possible to integrate the stringers into a single piece of skin without relying on riveted joints.

Fuselage skins made of composite material can be manufactured in a 360 degree one-shot piece, having either a conical or cylindrical shape. They can also be manufactured separately in several panels that will be mechanically joined at a later stage (*panellized solution*)*.* In both cases, the stringers made of composite material are integrated with the skin during the manufacturing process, and can either be co-bonded or co-cured to said skin.

Besides integrating the stringers, frames made of composite material could likewise be subject to integration with the skin, either through a process of co-bonding or co-curing. In this way, the ultimate goal is to join or integrate into a single piece the structural parts which comprise the complete structure of the fuselage, that is, skin plus stringers and frames, all without having to rely on riveted joints.

Reference is made to an integrated structure when the different elements comprising said structure are manufactured at the same time in a single process, without the need of the subsequent use of any type of riveted joints. Thus, obtaining integrated structure types is another advantage of the structures made of composite materials, given that, obviously, it is not possible to manufacture said structures in a single integrated process when using metallic material. Thus, integrated structures in composite material obtain weight saving and, consequently, cost saving vis-à-vis similar non-integrated structures made of metal, for which it is necessary to assemble a large number of individual pieces.

It is typical in aircraft fuselage structures to have large openings in the skin, which can often be very large; said openings permit access to the interior of the structure of the aircraft fuselage, or enable passing other structural components and systems through them. These openings weaken the structural resistance of the fuselage of the aircraft, and so it becomes necessary to reinforce said opening by means of additional structural elements, typically forming a frame around the hole or opening that has been made. In this way, it is typical to use reinforcing beams as additional structures, said reinforcing beams joined with rivets to the skin adjacent to the zone around the edge of the opening for the purpose of recovering the loss of resistance and stiffness caused by said hole or opening. These reinforcing beams can be made of either metallic or composite materials.

The problem arising from these known solutions is that, during the separate manufacturing of each one of these reinforcing components, as well as the assembly of the same by means of riveted joints and auxiliary pieces to create the reinforcement frame and to serve for joining the different components to the structure, it implies, in the majority of cases, a substantial weight increase and, above all, notable cost increases, as assembly work is added to the overall structure, given that the manufacturing and assembly of these structures is laborious and must be done manually.

It is known in the state of the art, such as, for example, in document W02009/138546 of the applicant, an integrated structure for an aircraft made of composite material comprising a skin and stringers, said structure further comprising U shaped elements that in themselves act as frame feet and as skin, thus constituting an integrated fuselage structure without rivets or joints. This document, however, does not provide a solution to a possible integration of the reinforcement zones of the openings in aircraft fuselages.

It is also known, and also from the same applicant, document W02010/070184, which proposes an integrated structure for the zone of load introduction in the rear fuselage of an aircraft made of composite material. This document likewise does not provide a solution to a possible integration of the reinforcement zones of the openings in aircraft fuselages.

Likewise known in the state of the art is WO 2011/135134 of the applicant, in which an internal aircraft structure is disclosed that comprises a skin made of composite material, some stringers made of composite material integrated in the interior of said skin and some frames. This document likewise does not provide a solution to a possible integration of the reinforcement zones of the openings in the aircraft fuselages.

In light of the above comments, it would, thus, be desirable in the zones of the openings of the internal fuselage structure of an aircraft made of composite material, that said openings be reinforced by means of reinforcing structural elements that could be integrated into the skin of the fuselage structure, obtaining in this way the resulting reduction of assembly work and the complete or partial elimination of additional joining pieces.

The present invention is directed towards providing an integrated solution of the type that has just been commented.

### Summary of the Invention

Therefore, the aim of the present invention is to provide a reinforcing structure integrated in an internal structure of an aircraft made of composite material, in particular, in an opening made in the structure of an aircraft fuselage.

The structure of the aircraft fuselage made of composite material comprises a skin and a plurality of stringers that longitudinally stiffen said skin, in such a way that the stringers are integrated with the skin in a single piece without the need of employing additional joints. This fuselage structure comprises openings, each one of which is structurally reinforced by means of an integrated reinforcing structure which comprises, in accordance with the present invention, at least a pair of lateral reinforcing elements having a beam shape placed in a longitudinal orientation on each side of the opening, these reinforcing elements being integrated with the skin of the fuselage structure. Furthermore, in the event that there are stringers in the structure of the aircraft fuselage in the front and/or rear zone of the opening, these lateral reinforcing elements morph longitudinally once they surpass the edges of the sides of the opening, so as to take on the shape of front and/or rear longitudinal stringers.

In accordance with the invention, the lateral reinforcing elements on the edges of the opening of the primary structure of the aircraft fuselage are obtained in an integrated manner and as a single piece during the same manufacturing process of the fuselage skin, being obtained either by co-bonding or co-curing with the same. The outcome of this process is the final aircraft structure, in which all of the additional elements and pieces have been completely eliminated, even in the reinforcing structures of the openings, given that an integral structure has been obtained, in which the structural efficiency has been improved and cost efficiency has been optimised.

Other features and advantages of the present invention will be disclosed in the detailed description that follows of an exemplary, non-limiting, embodiment of its object in relation to the accompanying Figures.

### Brief Description of the Figures

Figure 1a and 1b display the main structural components that integrate the rear part of the structure of an aircraft fuselage.
Figure 2 displays a schematic view of some of the large openings in the fuselage structure of an aircraft, as represented in Figures 1a and 1 b, which are necessary for assembling the structural components displayed in said Figures, as well as for accessibility to the interior of the fuselage.
Figures 3a and 3b display the typical concept of the reinforcing beam that is riveted to the edge of the openings in the direction of the stringers, in accordance with known prior art.
Figures 4a to 4c display the location of the reinforcing beams described in Figures 3a and 3b in accordance with known prior art.
Figures 5a to 5d display a detail of the reinforcing structure integrated in the internal structure of the aircraft structure made of composite material in accordance with the present invention.
Figures 6a to 6e display the manufacturing tooling employed for the integration of the reinforcing structure in the internal structure of the aircraft structure made of composite material in accordance with the present invention.
Figures 7a and 7b display the possibility of changing the cross section of the reinforcing structure of the present invention along its full length.
Figures 8a and 8b display the possibility of integrating reinforcing gussets in the reinforcing structure itself, in accordance with the present invention, as well as the compatibility of the object of the invention with any philosophy of preforms and stacks integrated with the reinforcing structure itself, in accordance with the invention.
Figures 9a to 9e display the compatibility of the lateral reinforcing elements having a beam shape with the manufacturing of "J" stringers in the reinforcing structure, in accordance with the present invention.
Figures 10a to 10c display the compatibility of the lateral reinforcing elements having a beam shape with other beam sections, as are the closed omega and the double "J", in the reinforcing structure in accordance with the present invention.
Figures 11a and 11b display the crossover between lateral reinforcing elements having a beam shape with the frames in the reinforcing structure of the fuselage structure in accordance with the present invention.

### Detailed description of the Invention

Therefore, in accordance with a preferred embodiment of the invention, a reinforcing structure 10 is provided, integrated in the internal structure of the aircraft fuselage 2 made of composite material, in particular, in an opening 1 made in the structure of said fuselage.

The structure of the aircraft fuselage 2 comprises a skin 3 and a plurality of stringers 4 that longitudinally stiffen said skin 3, in such a way that the stringers 4 are integrated with the skin 3 in a single piece without the need of employing additional joints. This fuselage structure comprises significant openings 1, each one of which is structurally reinforced by means of a reinforcing structure 10, which comprises a pair of lateral reinforcing elements 20, 30 having a beam shape placed in a longitudinal orientation on each side of the opening 1, these reinforcing elements being integrated with the skin 3 of the fuselage structure 2.

As a consequence, the reinforcing structure 10 is integrated within the primary structure of the aircraft fuselage 2, this primary structure of the aircraft fuselage 2 being preferably made of composite material.

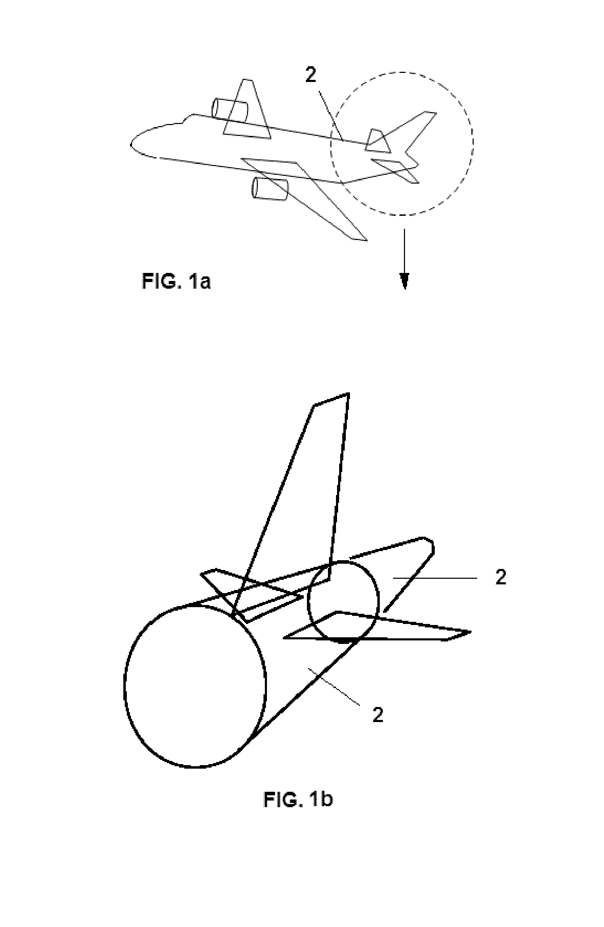

In accordance with a preferred embodiment of the invention, openings 1 are made on the skin 3 of the fuselage 2 at the rear part of the aircraft, as shown in Figures 1a and 1b. These openings 1 enable the installation of structural components in said rear part of the aircraft, such as, for example, the installation of the horizontal stabilizer, or they likewise enable access to the interior of fuselage 2 for system assembly and inspection.

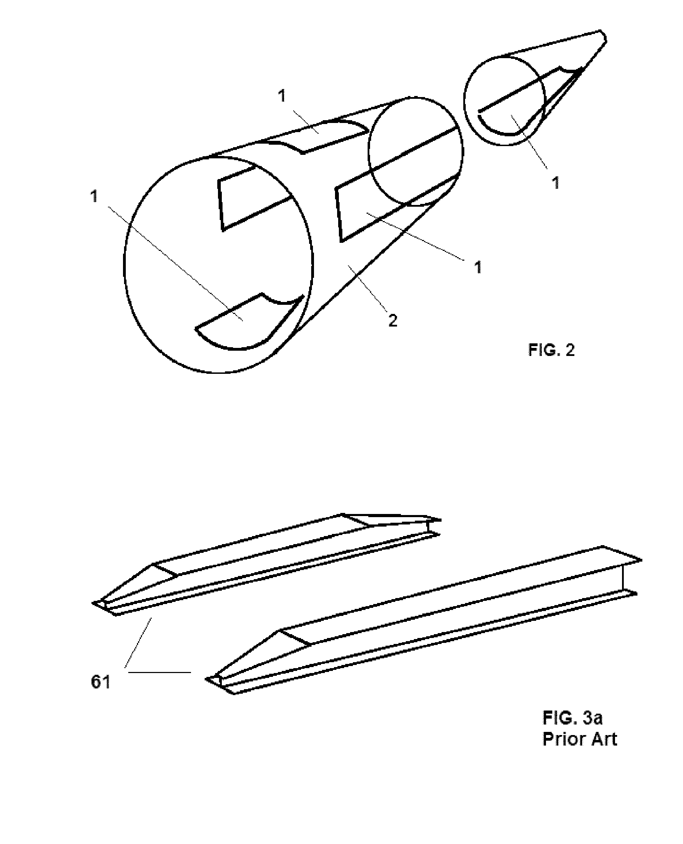

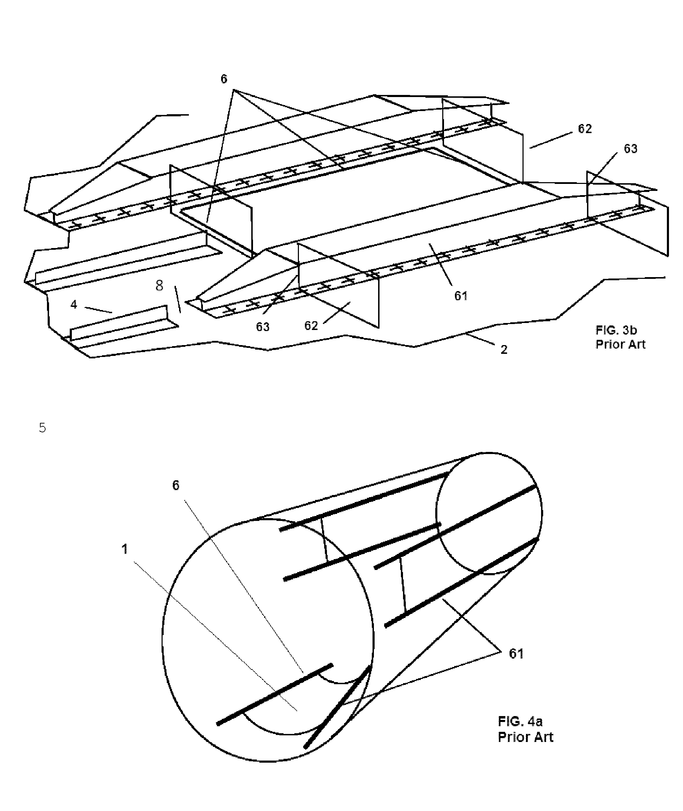

Traditionally the typical solution for reinforcing said openings 1 made in the skin 3 of the fuselage 2 consisted in riveting to said skin 3 a frame member 6 made of longitudinal beams 61 and frames 62, as shown in Figures 3a and 3b.

As shown in Figures 3a and 3b, an opening 1 made in the fuselage 2 of an aircraft, when this opening 1 has a large size, comprises, in accordance with known prior art, a reinforcing structure or frame member 6 encasing the perimeter of said opening 1, comprising additional pieces in the form of longitudinal beams 61. Longitudinal beams 61 are, in turn, riveted to the frames 62 of the primary structure of the fuselage 2, by means of additional pieces having angular shapes and mouldings (not shown in Figure 3b). Longitudinal beams 61 are also joined to the stringers 4 by means of angles and mouldings (called straps) riveted to each other (not shown in Figure 3b). All this makes a reinforcing frame member 6, traditionally riveted to the skin 3 by means of a plurality of additional pieces joining the parts (Figure 3b).

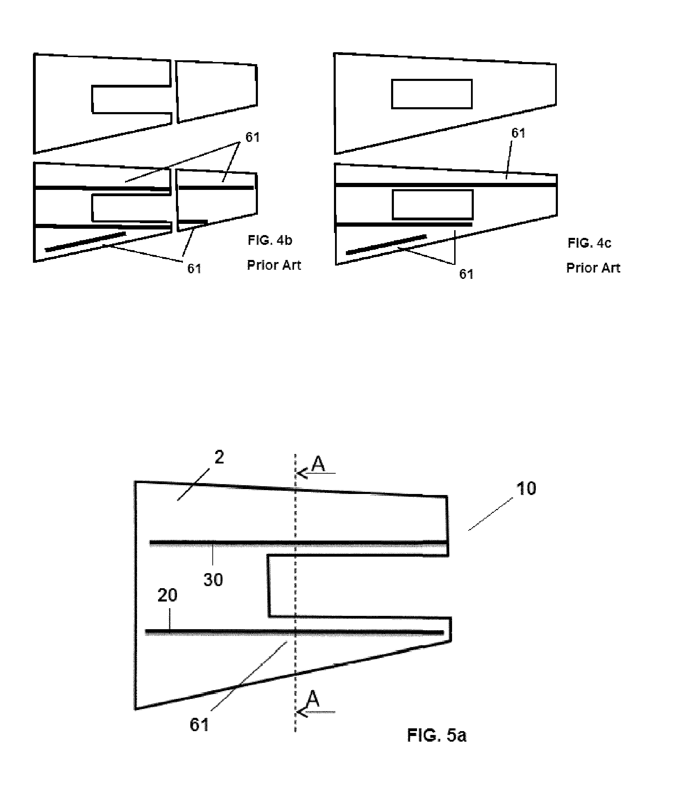

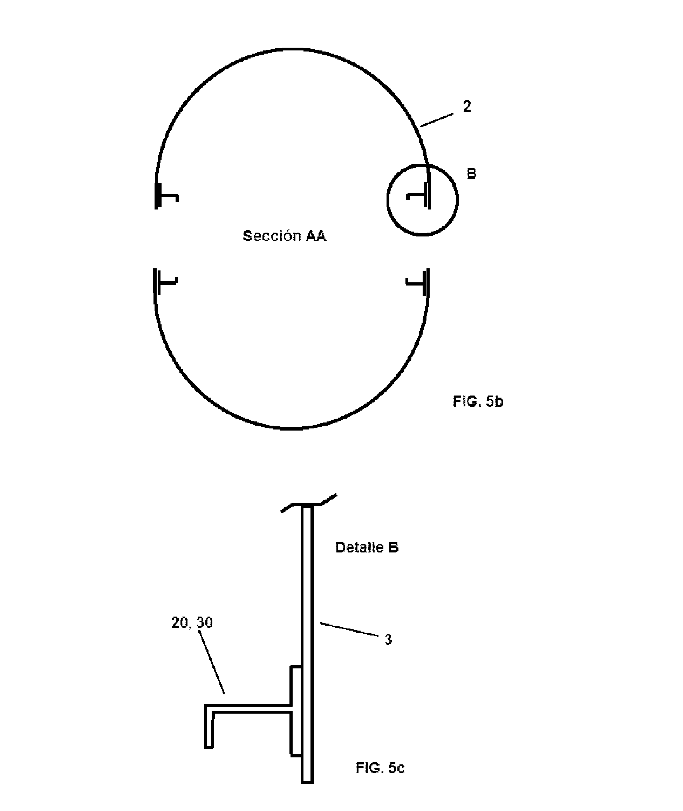

In a first integration step, the present invention aims at developing an integrated reinforcing structure 10, which comprises stringers 4 integrated with the skin 3, as well as some lateral reinforcing elements 20, 30 having a beam shape, as follows from Figures 5a to 5c.

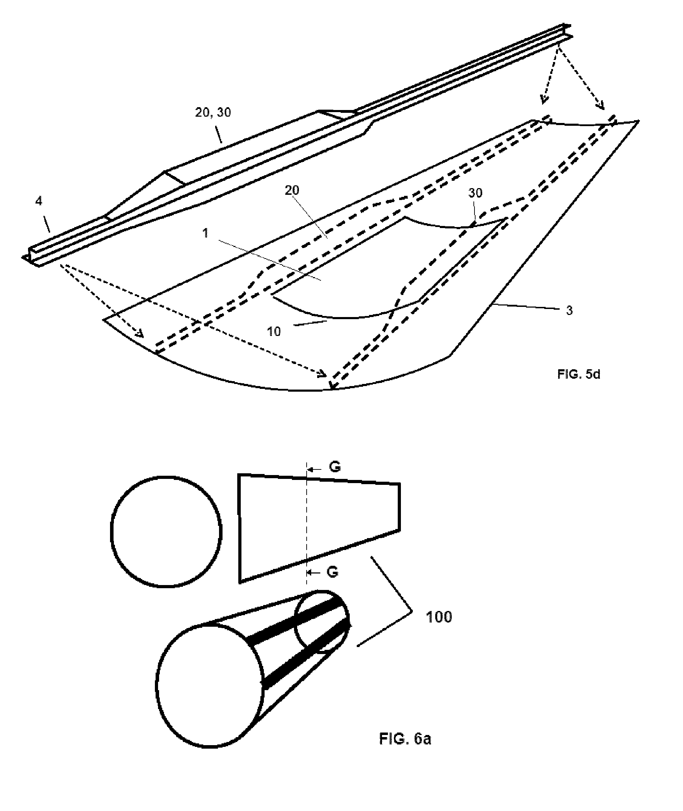

The object of the invention is to optimize the design of the skin 3 made of carbon fibre by seeking a solution in a more integrated piece and increasing structural efficiency, as well as generating cost savings. Thus, in accordance with the invention, and analysing in more detail the previously mentioned integration processes being sought, lateral reinforcing elements 20, 30, having a beam shape, are integrated with stringers 4 in a single integrated and unitary piece, as shown in Figure 5d, in such a manner that lateral reinforcing elements 20, 30 are designed in such a way that they morph longitudinally to the shape of stringers 4, once they surpass the edges of the sides of opening 1. Thus, the lateral reinforcing elements 20, 30 (made of composite materials) of the primary structures of aircraft fuselage 2 are obtained in an integrated manner and in a single piece during the manufacturing process of the skin 3 itself (likewise made of composite material) by means of co-bonding and co-curing of composite materials. The fact that no pieces or additional joining elements are used between the lateral reinforcing elements 20, 30 having a beam shape and the stringers 4, as in the prior art, has the advantage of saving costs during the assembly process by being able to position lateral reinforcing elements 20, 30 having a beam shape during the same manufacturing process.

In accordance with another aspect of the invention, a tool 100 is developed for manufacturing an integrated reinforcing structure 10, as it has been defined previously. Said tool 100 enables the placement of lateral reinforcing elements 20, 30 having a beam shape and their integration with the skin 3 and the stringers 4, by means of a co-bonding and co-curing process. The different components of the tool 100, in accordance with the invention, are detailed below, making reference to attached Figures 6a to 6e, in which:
- Figure 6a shows a male tool 105, over which the fuselage 2 of the invention is taped.

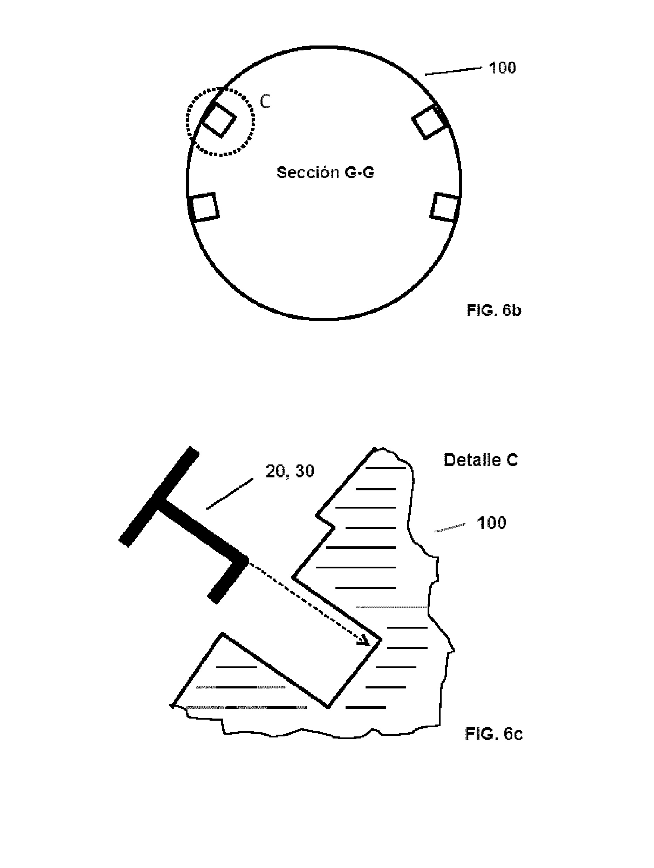

- Figure 6b shows a detail of section G-G of the male tool 105 of Figure 6a, in which a plurality of slits 104 are visible for placing stringers 4 and lateral reinforcing elements 20, 30 having a beam shape during the curing process, in such a way that said elements 20, 30, and stringers 4 end up integrated with the fuselage structure 2 of the invention.
- Figure 6c shows a detail of a slit 104, in which a lateral reinforcing element 20, 30 having a beam shape (displayed in Figure 6c) or a stringer 4 (not shown), is placed during the curing process of the overall reinforcing structure 10.

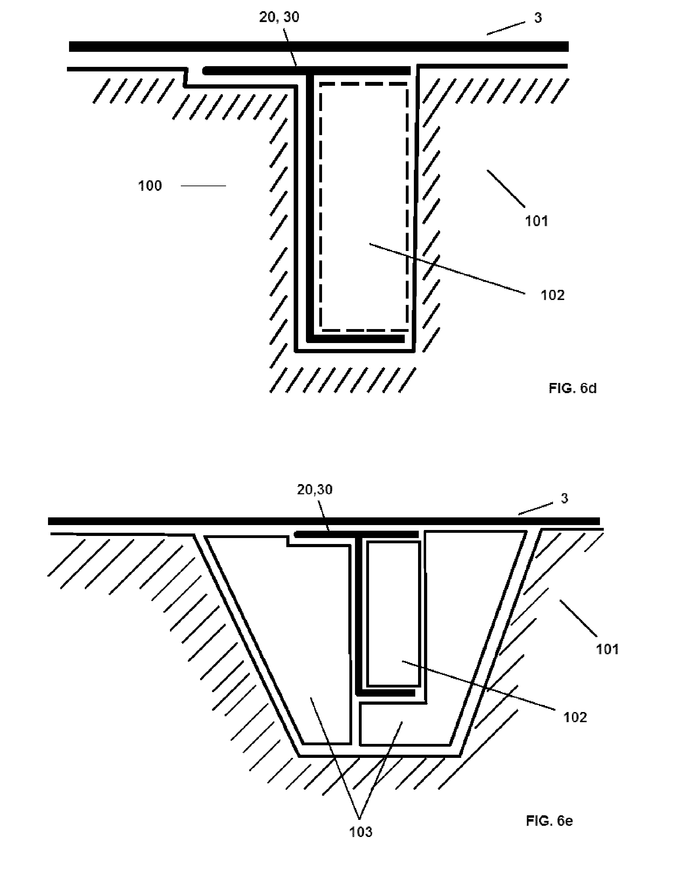

- Figure 6d shows a schematic view of the configuration of a slit 104 and of the tool 100 of the invention, employed for integrating reinforcing elements 20, 30 having a beam shape and stringers 4 with the skin 3.
- Figure 6e shows a variant of the tool 100, that can be used when the geometry of the skin 3 assembly impedes the simplification of the concept shown in Figure 6d.

In accordance with the invention, the tool 100 comprises, preferably, a rigid element 101, and a deformable element 102 (see Figure 6d), being the deformable element 102 an inflatable spindle or similar. In accordance with another preferred embodiment of the invention, shown in Figure 6e, the tool 100 is a tool developed with a modular shape, which comprises a rigid element 101 and a deformable element 102, which are similar to those of Figure 6d, comprising, furthermore, a rigid modular element 103.

Figure 6e shows a variant of the tool 100. In this specific case, the tool 100 comprises two rigid elements 101 and 103, in such a way that the concept shown in Figure 6e detaches the extraction of the deformable element 102 from the geometric restrictions of the elements 20, 30 having a beam shape and the skin 3 contained in the rigid elements 101 and 103 being extracted in a subsequent sequence to the extraction of the deformable element 102.

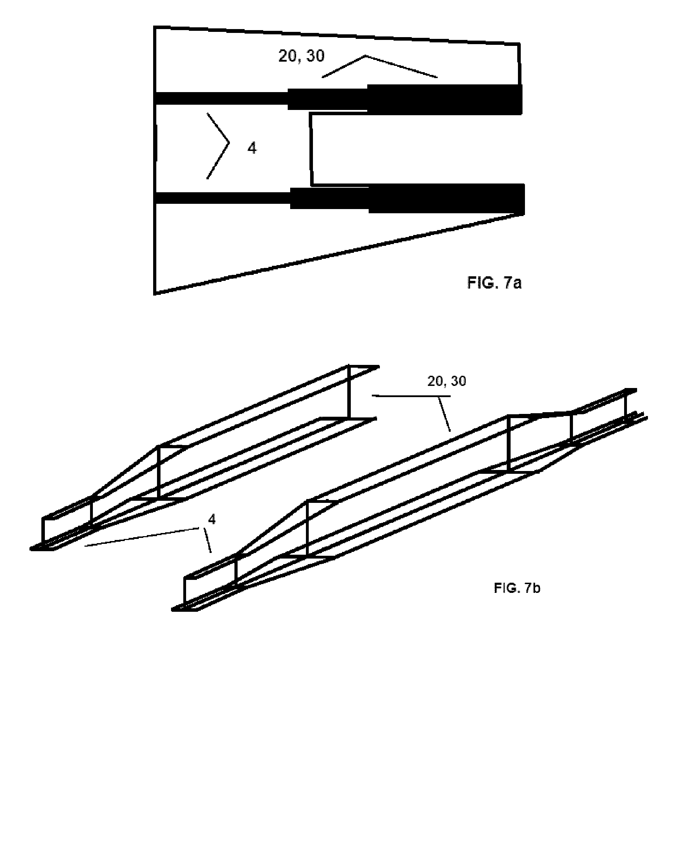

The rest of the structure of the fuselage 2 is not altered with additional pieces, as the joining of lateral reinforcing elements 20, 30 having a beam shape with the stringers 4 is not necessary, as they are a single piece. Figures 7a to 7b show the compatibility of the concept of the invention with the geometric variation of said lateral reinforcing elements 20, 30 having a beam shape, as well as the transition of the section of these elements 20, 30 having a beam shape, to a cross section in the shape of the stringer 4.

The taping manufacturing process of the skin 3 inside the internal structure of the aircraft fuselage 2 is not affected by the solution proposed by the invention. The 360 degree one-shot taping of the entire fuselage , and the assembly of panels manufactured separately joined by means of additional joints to the fuselage assembly are not affected by the solution proposed by the invention either.

The concept developed by the invention is also perfectly compatible both for collapsible extraction tools as well as for extraction tools in a given direction that is determined by the variation of thermal dilatation coefficients.

Furthermore, the invention is perfectly compatible with current bonding or riveting repair techniques, both during production and during repairs made during service of the aircraft.

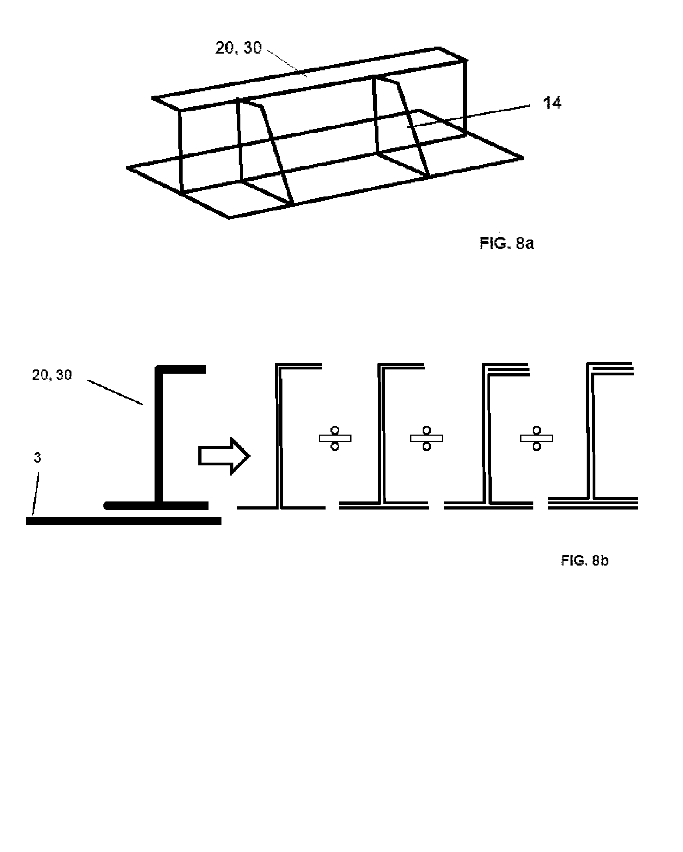

As it can be seen in Figures 8a and 8b, the present invention does not introduce restrictions on the stacking and/or preforms used for shaping elements 20, 30 having a beam shape, neither fresh nor cured. Likewise, the concept developed by the present invention is compatible with the inclusion of bracket type elements 14 in the corresponding lateral zone of lateral reinforcing elements 20, 30 having a beam shape, indicated in Figure 8a, employing for this purpose a tool 100 that comprises a collapsing type deformable element 102.

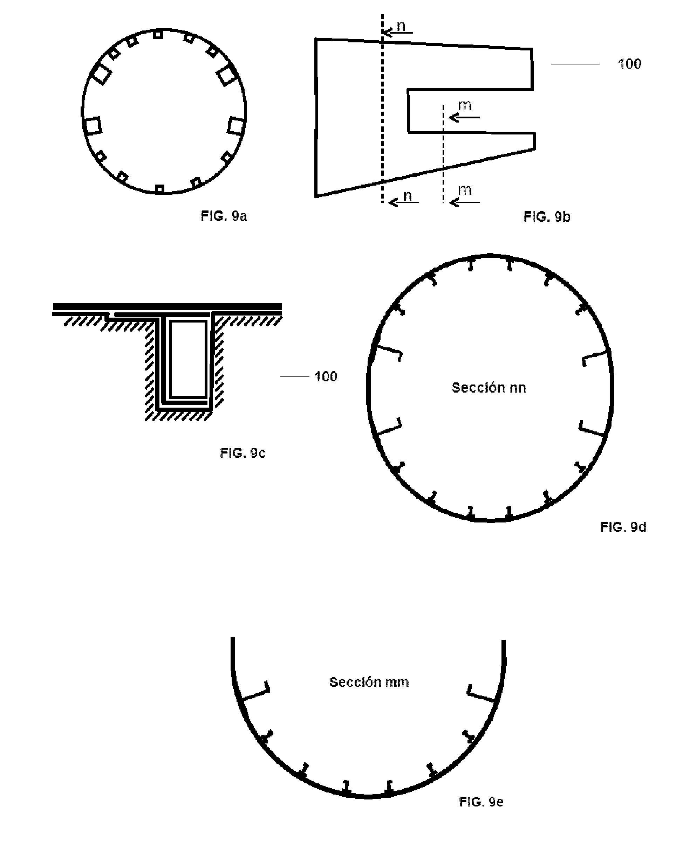

The concept of integrating reinforcing elements for openings 1, which the present invention includes, is perfectly applicable to the assembly of the stringers 4 which comprise the section of the aircraft fuselage 2, specifically, with a distribution of stringers 4 having a J shaped section as shown in Figures 9a to 9e. The uniformity of the concept for the stringers 4 and lateral reinforcing elements 20, 30 having a beam shape leads to an important reduction of manufacturing costs.

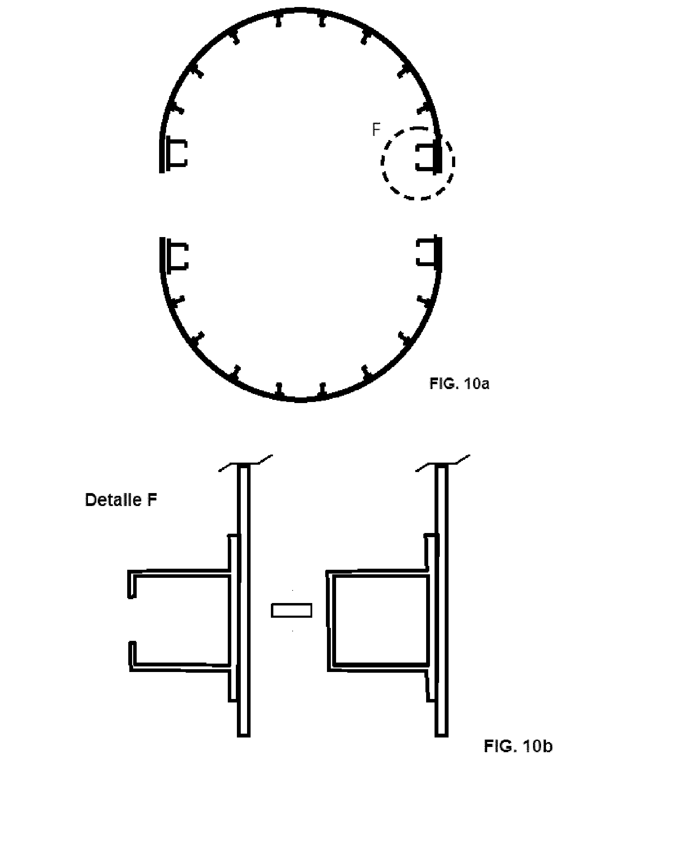

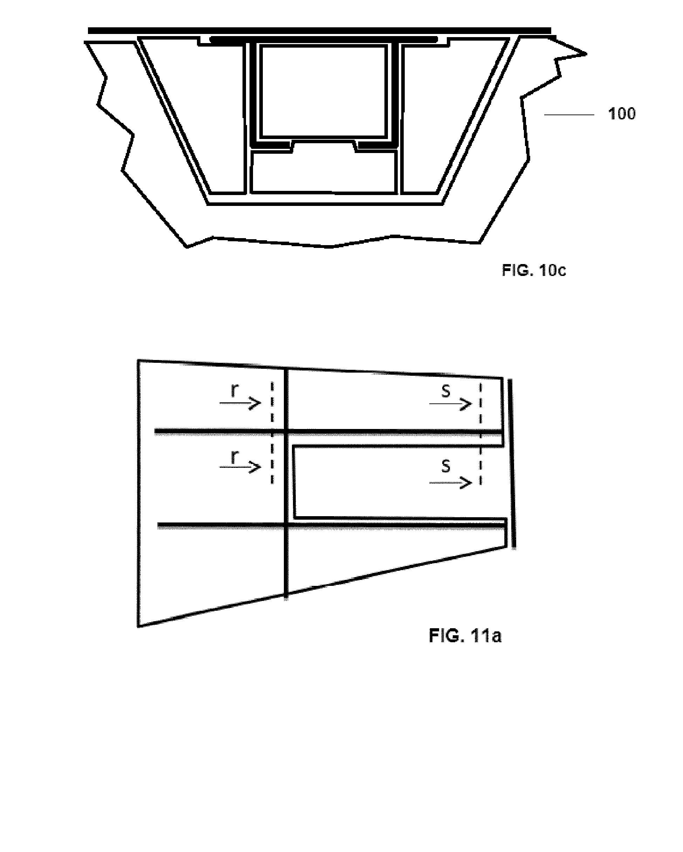

Figures 10a to 10c show the compatibility of the present invention with different sections of lateral reinforcing elements 20 30 having a beam shape. The purpose of this is to obtain an optimum compatibility of the manufacturing process with the beam section for different configurations or load demands on the fuselage structure 2; that is, the invention is not limited by the size of the aircraft, and furthermore is also compatible for the same fuselage structure 2 of the same aircraft as it is able to apply different beam sections to different openings 1, depending on the load requirements of each of said sections.

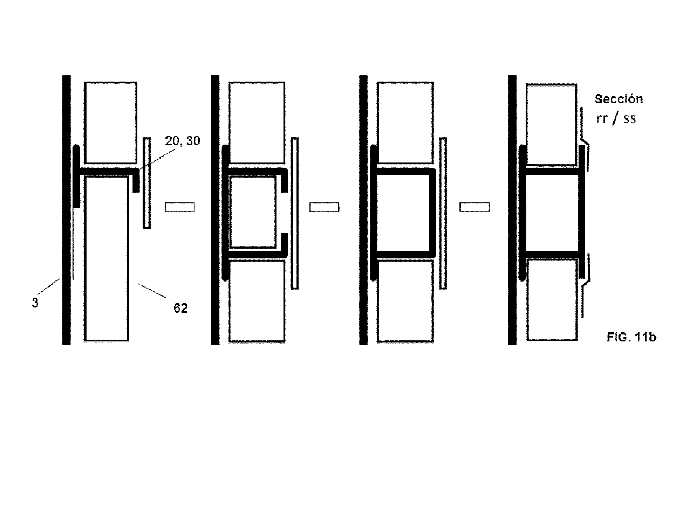

Figures 11a and 11b display the crossover between lateral reinforcing elements 20, 30 having a beam shape of the invention and the frames 62 of the structure, displaying the compatibility of the invention for different sections of the beam and their joining to frames 62. Lateral reinforcing elements 20, 30 having a beam shape according to the invention are applicable to both frames 62 riveted to the skin 3 of the structure and to frames 62 integrated with said skin 3.

As has been described, the solution of the integration of the reinforcing beams of the invention for large openings consists of combining a system of tools 100 that are compatible with the manufacturing of stringers 4 and some optimized sections of lateral reinforcing elements 20, 30 having a beam shape, depending on the intrinsic load requirements on zone or opening 1 at issue. Thus it is possible to apply different sections of lateral reinforcing elements 20, 30 having a beam shape to different zones, thus avoiding the need to rivet said lateral reinforcing elements 20, 30 to the skin 3, allowing the stringer 4 and the lateral reinforcing elements 20, 30 having a beam shape to be integrated in a single piece, and further allowing the possibility of integrating these two elements with the frames 62 of the fuselage structure 2.

Preferably, the internal structure of the aircraft structure 2, in which the reinforcing structure 10 of the invention is applied, is made of composite material, which can be either carbon fibre or glass fibre with thermosetting or thermoplastic resin. Likewise, the composite material employed can be prepreg or dry fibre, and in the latter case resin infusion processes can be used for their manufacture.

The main field of application of the reinforcing structure 10 of the invention is that of aircraft fuselage structures, although the invention can also be applied to other structures having similar features, for example, to aircraft torsion boxes.

The invention is applicable to different shapes of the opening 1, as long as the structural solution comprises the placement of lateral reinforcing elements 20, 30 having a beam shape in the direction of the stringers 4.

The invention can be applied both to very heavy load bearing zones of the aircraft fuselage skin 3, as is the case of the rear end of the aircraft, as well as to other parts of the fuselage that support lesser structural load requirements.

Although the present invention has been disclosed entirely in connection with the preferred embodiments, it is obvious that those modifications that are within its scope may be introduced, the scope should not be considered limited by the previous embodiments, but rather by the content of the following claims.

## Claims

1. Reinforcing structure (10) in the internal structure of an aircraft made of composite material, said structure (10) comprising a skin (3) and a plurality of stringers (4), **characterized in that** it comprises at least a pair of lateral reinforcing elements (20, 30) having a beam shape in the longitudinal orientation, these reinforcing elements (20, 30) being integrated with the skin (3) of the structure, the stringers(4) being also integrated in said skin (3), and the lateral reinforcing elements (20, 30) being designed in such a way that they longitudinally morph into the shape of the stringers (4).

2. Reinforcing structure (10) in accordance with claim 1 which is applied to an opening (1) in the internal structure of an aircraft, such that lateral reinforcing elements (20, 30) having a beam shape are located in each one of the sides of the opening (1) in a longitudinal orientation, the lateral reinforcing elements (20, 30) being designed in such a way that they morph longitudinally into the shape of the stringers (4) once they surpass the ends of the sides of the opening (1).

3. Reinforcing structure (10) in accordance with any of claims 1-2, wherein the reinforcing elements (20, 30) are obtained through techniques of co-bonding or co-curing of composite materials during the same manufacturing process of the skin (3).

4. Reinforcing structure (10) in accordance with any of claims 1-3, wherein the stringers (4) have a transversal section in a "J" shape.

5. Reinforcing structure (10) in accordance with any of claims 2-4, wherein the opening (1) is placed in the aircraft fuselage (2).

6. Reinforcing structure (10) in accordance with any of claims 2-5, wherein the opening (1) is placed in a a torsion box of the aircraft.

7. Reinforcing structure (10) in accordance with any of claims 2-6, wherein the opening (1) is placed in in the rear part of the aircraft and enables the installation of the horizontal stabilizer.

8. Tool (100) for making a reinforcing structure (10) in accordance with any of claims 1-7, comprising at least one rigid element (101) and a deformable element (102) designed in such a way that they enable lateral reinforcing elements (20, 30) having a beam shape to morph longitudinally until they obtain the shape of the stringers (4) in the same manufacturing process as the skin (3) and are integrated in the same.

9. Tool (100) in accordance with claim 8, wherein the deformable element (102) is a collapsible type element.

10. Tool (100) for making a reinforcing structure (10) in accordance with any of claims 8-9, further comprising at least one modular rigid element (103) configured in such a way that it enables lateral reinforcing elements (20, 30) having a beam shape to morph longitudinally until they obtain the shape of the stringers (4) in the same manufacturing process as the skin (3) and are integrated in the same.
